# EUROPÄISCHE PATENTSCHRIFT

(11) **EP 2 997 812 B1**
(45) Veröffentlichungstag und Bekanntmachung des Hinweises auf die Patenterteilung: **15.11.2017**
(21) Anmeldenummer: 15002659.9
(22) Anmeldetag: 12.09.2015
(51) Int. Cl.: A01D 46/253, A01D 46/26

(54) **ERNTEGERÄT**
HARVESTING DEVICE
APPAREIL DE RECOLTE

(30) Priorität: 16.09.2014 DE 102014013667
(43) Veröffentlichungstag der Anmeldung: 23.03.2016
(73) Patentinhaber: Andreas Stihl AG & Co. KG, 71336 Waiblingen (DE)
(72) Erfinder: Kaupp, Klaus, D-70329 Stuttgart (DE); Hettmann, Heinz, D-73614 Schorndorf (DE); Sasse, Daniel, D-70374 Stuttgart (DE); Menzel, Johannes, D-73529 Rechberg (DE)
(74) Vertreter: Reinhardt, Annette

(56) Entgegenhaltungen:
- EP-A1- 2 491 782
- BR-A- PI0 700 905
- BR-U- MU8 700 205
- GB-A- 1 140 941

## Beschreibung

Die Erfindung betrifft ein Erntegerät der im Oberbegriff des Anspruchs 1 angegebenen Gattung.

Aus der DE 10 2007 002 625 A1 ist ein Erntegerät bekannt, das zwei schwenkbar gelagerte Rechen besitzt. Im Betrieb werden die Rechen gegensinnig hin- und herschwenkend bewegt. Jeder Rechen besitzt einen Träger, der hin- und herschwenkend angetrieben ist. Die Finger des Rechens sind einzeln an dem Träger montiert. Zum Austausch der Rechen, beispielsweise, wenn eine andere Länge von Fingern benötigt wird oder Finger beschädigt sind, werden die einzelnen Finger vom Träger gelöst und ausgetauscht.

Aus der BR PI0 700 905 A geht ein Erntegerät nach dem Oberbegriff des Anspruchs 1 hervor, dessen Rechen an Armen des Getriebegehäuses schwenkbar gelagert sind. Die Rechen sind jeweils in einen Schlitz des zugehörigen Arms eingesteckt. Der Schlitz bildet eine Aufnahme für den Rechen. Eine entsprechende Lagerung eines Rechens an einem Arm eines Getriebegehäuses zeigt auch die BR MU8 700 205 U.

Aus der EP 2 491 782 A1 gehen Träger für die Finger eines Rechens hervor, die über Schwenklager schwenkbar gelagert sind.

Die GB 1 140 941 A zeigt eine Rechenkonstruktion, bei der einzelne Finger eines Rechens zum Wenden von Heuschwaden über ein elastisches Element an einem Tragrohr des Rechens fixiert sind.

Der Erfindung liegt die Aufgabe zugrunde, ein Erntegerät der gattungsgemäßen Art zu schaffen, bei dem ein Austausch der Rechen schnell und einfach möglich ist.

Diese Aufgabe wird durch ein Erntegerät mit den Merkmalen des Anspruchs 1 gelöst.

Es ist vorgesehen, nicht die einzelnen Finger des Rechens auszutauschen, sondern den gesamten Rechen. Hierzu ist vorgesehen, dass der Rechen über Mittel zur Fixierung an einem Rechenträger gehalten ist. Die Mittel zur Fixierung umfassen eine Aufnahme und einen Halteabschnitt, wobei der Halteabschnitt bei fixiertem Rechen in der Aufnahme angeordnet ist. Die Aufnahme kann dabei am Rechenträger und der Halteabschnitt am Rechen vorgesehen sein. Alternativ kann es auch zweckmäßig sein, dass die Aufnahme am Rechen ausgebildet ist und der Halteabschnitt am Rechen. Die Aufnahme besitzt einen Verbindungsbereich, zwei einander gegenüberliegend angeordnete Seitenbereiche und eine dem Verbindungsbereich gegenüberliegend angeordnete Öffnung, durch die der Halteabschnitt ragt. Um eine Vorfixierung des Rechens an dem Rechenträger bei der Montage zu erreichen, ist vorgesehen, dass mindestens ein Seitenbereich den Halteabschnitt in Richtung auf die Öffnung hintergreift. Dadurch ist der Halteabschnitt in der Aufnahme gehalten, bis eine vollständige Fixierung des Halteabschnitts in der Aufnahme erfolgt. Dadurch ist eine einfache und schnelle Montage des Rechens an dem Rechenträger möglich. Es kann auch vorgesehen sein, über den den Halteabschnitt hintergreifenden Seitenbereich eine endgültige Fixierung des Rechens an dem Rechenträger und nicht lediglich eine Vorfixierung vorzusehen. Dadurch können weitere Mittel zur Fixierung entfallen, und der Austausch eines Rechens kann schnell und einfach erfolgen. Dadurch, dass der gesamte Rechen an dem Rechenträger lösbar gehalten ist, kann der gesamte Rechen ausgetauscht werden. Ein Austausch einzelner Finger des Rechens erfolgt nicht.

Die Aufnahme kann dabei mehrteilig ausgebildet sein. Beispielsweise können die beiden Seitenbereiche an unterschiedlichen, insbesondere am Verbindungsbereich miteinander verbundenen Bauteilen ausgebildet sein.

Vorteilhaft besitzen die Mittel zur Fixierung eine Erhebung, die in eine Nut eingreift. Über die Erhebung und die Nut kann auf einfache Weise ein Hintergreifen und damit eine Fixierung in Richtung auf die Öffnung erzielt werden. Die Erhebung und die Nut sind vorteilhaft nach Art einer Führung ausgebildet, so dass der Rechen in Richtung der Nut in den Rechenträger geschoben werden kann. Vorteilhaft ist die Nut an der Aufnahme ausgebildet und die Erhebung an dem Halteabschnitt. Die Erhebung ist insbesondere als Führungssteg ausgebildet. Die Nut und der Führungssteg verlaufen vorzugsweise parallel zur Längsrichtung der Aufnahme, insbesondere parallel zur Längsrichtung des Verbindungsbereiches der Aufnahme. Dadurch ist der Rechen in Längsrichtung der Aufnahme in den Rechenträger einschiebbar. Dadurch werden eine einfache Montage und eine gute Vorfixierung des Rechens am Rechenträger erreicht. Die Längsrichtung der Aufnahme kann dabei beispielsweise quer zur Längserstreckung der Finger angeordnet sein. Die Längsrichtung der Aufnahme ist insbesondere in einer Richtung ausgerichtet, die parallel zu einer Verbindungsgeraden der Anbindungsbereiche, an denen die Finger am Halteabschnitt angebunden sind, liegt. Bei seitlich zueinander versetzten Anbindungsbereichen ist die Verbindungsgerade eine Mittellinie zwischen den Anbindungsbereichen. Auch eine Ausrichtung der Längsrichtung der Aufnahme etwa in Längsrichtung der Finger, insbesondere parallel zur Längsrichtung der Finger, kann jedoch vorteilhaft sein. Die Aufnahme und der Halteabschnitt können dabei so ausgebildet sein, dass der Rechen am Rechenträger bereits weitgehend fest gehalten ist, wenn der Führungssteg in der Nut angeordnet ist.

Für eine einfache Montage ist insbesondere vorgesehen, dass die Nut und die Erhebung jeweils mindestens zwei in Längsrichtung der Nut beabstandete Abschnitte umfassen. Der Abstand zwischen den Abschnitten der Nut entspricht dabei mindestens der Länge eines Abschnitts der Erhebung und der Abstand zwischen zwei Abschnitten der Erhebung mindestens der Länge eines Abschnitts der Nut. Dadurch kann der Rechen in Richtung auf den Verbindungsbereich in die Aufnahme eingesetzt werden, und zwar derart, dass jeweils eine Erhebung im Bereich des Abstandes zwischen zwei Abschnitten der Nut bzw. eine Nut im Bereich des Abstandes zwischen zwei Abschnitten der Erhebung angeordnet ist. Anschließend muss der Rechen nur um einen kleinen Weg in Längsrichtung der Nut verschoben werden, so dass die Abschnitte der Erhebung in die Abschnitte der Nut gelangen, um den Rechen am Rechenträger zu fixieren oder vorzufixieren. Vorteilhaft sind alle Abschnitte der Nut am Rechen bzw. am Rechenträger und alle Abschnitte der Erhebung am Rechenträger bzw. am Rechen vorgesehen. Es kann jedoch auch vorgesehen sein, dass sowohl der Rechen als auch der Rechenträger jeweils mindestens einen Abschnitt der Nut und mindestens einen Abschnitt der Erhebung aufweisen. Die Abstände zwischen den Abschnitten der Nut und die Abstände zwischen den Abschnitten der Erhebung sind dann in dem Zustand gemessen, in dem der Rechen an dem Rechenträger fixiert ist. Die Abstände sind dabei jeweils in Längsrichtung der Nut gemessen. Auch eine durchgehende Nut und eine durchgehende Erhebung können jedoch vorteilhaft sein.

Um eine gute Fixierung des Rechens am Rechenträger zu erreichen, ist vorgesehen, dass die Aufnahme eine erste Anlagefläche und eine zweite Anlagefläche für den Halteabschnitt besitzt. Zwischen diesen beiden Anlageflächen ist der Halteabschnitt vorteilhaft eingespannt. Um eine sichere Fixierung des Halteabschnittes zwischen den beiden Anlageflächen zu gewährleisten, ist vorgesehen, dass die erste Anlagefläche an einem Seitenbereich angeordnet und so geneigt ist, dass die erste Anlagefläche beim Bewegen der beiden Seitenbereiche aufeinander zu eine Kraft auf den Halteabschnitt in Richtung auf die zweite Anlagefläche ausübt. Die beiden Seitenbereiche werden vorteilhaft dann aufeinander zu bewegt, wenn der Rechen an dem Rechenträger über Befestigungsmittel, beispielsweise über Schrauben oder dergleichen fixiert wird. Dabei werden vorteilhaft die beiden Seitenbereiche gegen den Halteabschnitt gespannt. Dadurch, dass die beiden Seitenbereiche eine Kraft auf den Halteabschnitt in Richtung auf die zweite Anlagefläche ausüben, wird der Halteabschnitt an die zweite Anlagefläche geschoben und gelangt dadurch sicher zur Anlage an die zweite Anlagefläche. Eine vorteilhafte Gestaltung ergibt sich, wenn die zweite Anlagefläche am Verbindungsbereich angeordnet ist. Die erste Anlagefläche ist dabei vorteilhaft so ausgerichtet, dass der Normalenvektor auf die erste Anlagefläche in die Aufnahme zeigt und einen Richtungsanteil in Richtung auf den Verbindungsbereich besitzt.

Die Mittel zur Fixierung umfassen vorteilhaft mindestens ein Befestigungsmittel, das die Seitenbereiche der Aufnahme gegen den Haltebereich spannt. Durch das Befestigungsmittel wird der Haltebereich zwischen den Seitenbereichen der Aufnahme eingeklemmt. Das Befestigungsmittel kann beispielsweise eine in eine Mutter eingeschraubte Schraube umfassen. Auch andere spannende Befestigungsmittel können jedoch vorteilhaft sein. Bei einer mehrteilig ausgebildeten Aufnahme kann das mindestens eine Befestigungsmittel auch zur Verbindung der die Aufnahme begrenzenden Bauteile miteinander, beispielsweise zur Verbindung von zwei Seitenbauteilen, die jeweils einen Seitenbereich bilden, dienen. Vorteilhaft durchragt das mindestens eine Befestigungsmittel den Rechenträger und den Rechen. Dadurch wird ein kompakter Aufbau erreicht. Das Befestigungsmittel kann den Rechen am Rechenträger dadurch zusätzlich gegen eine Verschiebung in mindestens einer Richtung sichern. Vorteilhaft weist der Halteabschnitt mindestens eine Befestigungsöffnung auf, durch die das mindestens eine Befestigungsmittel ragt. Um ein einfaches Wechseln des Rechens am Rechenträger zu erlauben, ohne dass alle Befestigungsmittel entfernt werden müssen, ist vorteilhaft vorgesehen, dass die Befestigungsöffnung einen parallel zur Nut verlaufenden ersten Abschnitt und einen sich quer hierzu bis zur Stirnseite des Halteabschnitts erstreckenden zweiten Abschnitt besitzt. Der Rechen kann dadurch am Rechenträger so verschoben werden, dass das Befestigungsmittel sich zunächst im ersten Abschnitt und anschließend im zweiten Abschnitt bewegt, bis der Halteabschnitt des Rechens vom Rechenträger in einer Richtung vom Verbindungsbereich weg entnommen werden kann. Um ein Verschieben des Rechens am Rechenträger in Längsrichtung der Nut auch bei nicht vollständig angezogenem Befestigungsmittel zu vermeiden, kann jedoch auch vorgesehen sein, dass die Befestigungsöffnung als umfangsseitig vollständig geschlossenes Loch im Halteabschnitt ausgebildet ist.

Um die Montage zu vereinfachen, ist vorteilhaft mindestens ein Anschlag vorgesehen, der die Endposition des Halteabschnittes in der Aufnahme festlegt. Dadurch ist für den Bediener das Erreichen der Endposition des Rechens im Rechenträger einfach erkennbar. Der Rechen wird bis zum Anschlag in den Rechenträger eingeschoben und anschließend über die Befestigungsmittel fixiert. Ein einfacher Aufbau ergibt sich, wenn der Anschlag an einem Steg des Halteabschnitts ausgebildet ist. Ist die Erhebung am Halteabschnitt vorgesehen, so kann der Steg an die Erhebung anschließen und insbesondere quer zur Längsrichtung der Erhebung verlaufen. Besonders vorteilhaft ist die Aufnahme am Rechenträger ausgebildet und der Halteabschnitt am Rechen. Der Rechenträger ist insbesondere aus Metall ausgebildet und der Rechen aus Kunststoff. Der Rechen ist dabei vorteilhaft einteilig ausgebildet. Der Rechen ist insbesondere ein einteiliges Kunststoffspritzgussteil. Um eine verbesserte Vibrationsdämpfung und Fixierung zu erreichen, kann vorgesehen sein, dass zwischen dem Halteabschnitt und der Aufnahme ein elastisches Material vorgesehen ist. Das elastische Material kann dabei insbesondere an dem Rechenträger oder dem Rechen fixiert sein. Bei einer Ausbildung des Rechens aus Kunststoff kann das elastische Material an dem Rechen angespritzt bzw. in den Rechen eingespritzt sein.

Ausführungsbeispiele der Erfindung werden im Folgenden anhand der Zeichnung erläutert. Es zeigen:
- Fig. 1: eine schematische Darstellung eines tragbaren Erntegeräts,
- Fig. 2: eine Draufsicht auf Getriebegehäuse, Rechenträger und von den Rechenträgern gelösten Rechen des Erntegeräts,
- Fig. 3: eine perspektivische Darstellung der Rechen am Rechenträger,
- Fig. 4: einen Schnitt entlang der Linie IV-IV in Fig. 3,
- Fig. 5: eine ausschnittsweise perspektivische Darstellung des Halteabschnittes eines Rechens,
- Fig. 6: eine Draufsicht auf den Halteabschnitt aus Fig. 5,
- Fig. 7: eine perspektivische Darstellung eines Rechenträgers,
- Fig. 8: einen Schnitt entlang der Linie VIII-VIII in Fig. 6,
- Fig. 9: einen Schnitt durch den Rechenträger aus Fig. 7,
- Fig. 10: eine ausschnittsweise Schnittdarstellung des Halteabschnittes in der Aufnahme,
- Fig. 11: eine Draufsicht auf den Bereich der Befestigungsöffnung eines Ausführungsbeispiels eines Rechenträgers,
- Fig. 12: eine Draufsicht auf ein Ausführungsbeispiel eines Rechens in ausschnittsweiser Darstellung.

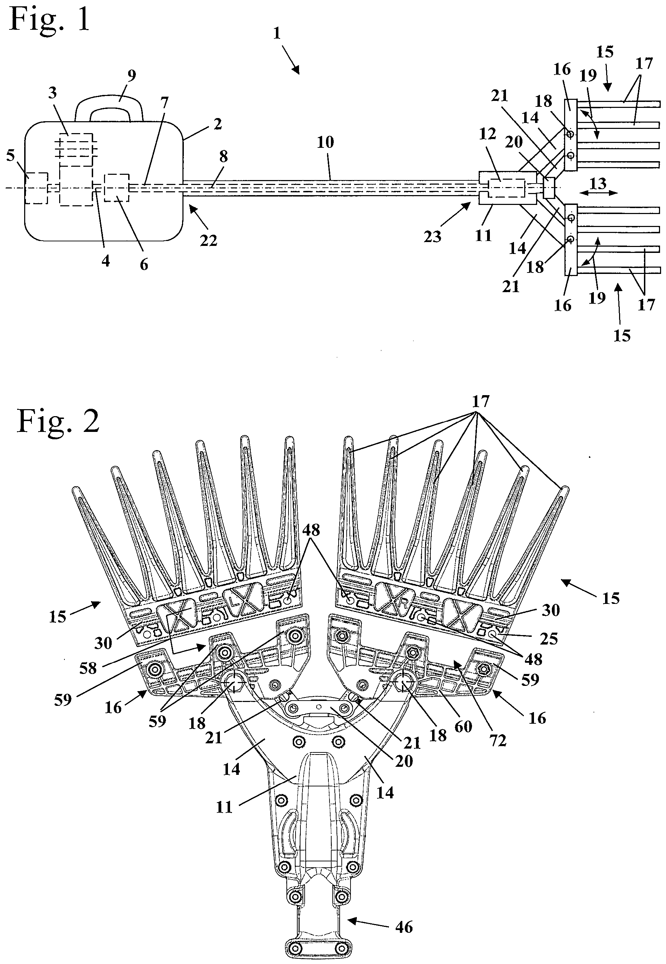

Fig. 1 zeigt als Ausführungsbeispiel für ein Erntegerät einen handgetragenen Kaffeeernter 1. Anstatt des Kaffeeernters 1 kann das Erntegerät auch ein anderes Erntegerät wie ein Olivenschüttler oder dergleichen sein. Der Kaffeeernter 1 besitzt ein Gehäuse 2, in dem ein Antriebsmotor 3 angeordnet ist. Im Ausführungsbeispiel ist der Antriebsmotor 3 als Verbrennungsmotor ausgebildet. Auch eine Ausbildung als Elektromotor, insbesondere als akkubetriebener Elektromotor kann jedoch vorteilhaft sein. Der Antriebsmotor 3 besitzt eine Kurbelwelle 4, die über eine Kupplung 6 eine Antriebswelle 7 um eine Drehachse 8 rotierend antreibt. Die Drehachse 8 entspricht der Längsmittelachse der Antriebswelle 7. Zum Starten des Antriebsmotors 3 ist eine Starteinrichtung 5 vorgesehen, die beispielsweise als Seilzugstarter ausgebildet sein kann. Zum Tragen und Führen des Kaffeeernters 1 im Betrieb ist am Gehäuse 2 ein Griff 9 vorgesehen.

Die Antriebswelle 7 durchragt ein Führungsrohr 10. An einem ersten Ende 22 des Führungsrohrs 10 ist das Gehäuse 2 des Kaffeeernters 1 angeordnet. An einem zweiten Ende 23 ist ein Getriebegehäuse 11 festgelegt, in dem ein schematisch gezeigtes Getriebe 12 angeordnet ist. Das Getriebe 12 wandelt die Drehbewegung der Antriebswelle 7 in eine hin- und hergehende Bewegung in Längsrichtung der Drehachse 8 der Antriebswelle 7 um. Dies ist durch den Doppelpfeil 13 angedeutet. Am Getriebe 12 ist ausgangsseitig ein Gabelkopf 20 angeordnet, der in Richtung des Doppelpfeils 13 hin- und hergehend angetrieben ist. Am Gabelkopf 20 sind zwei Gelenkhebel 21 schwenkbar gelagert. Jeder Gelenkhebel 21 ist gelenkig mit einem Rechenträger 16 verbunden. Die Rechenträger 16 sind an fest mit dem Getriebegehäuse 11 verbundenen Armen 14 gelenkig gelagert. Die Rechenträger 16 sind um Schwenkachsen 18 schwenkbar gelagert. Durch die hin- und hergehende Bewegung des Gabelkopfes 20 werden die Rechenträger 16 im Betrieb gegensinnig zueinander hin- und hergehend verschwenkt. Die Schwenkbewegung der Rechenträger 16 ist durch die Doppelpfeile 19 angedeutet. An den Rechenträgern 16 sind in Fig. 1 schematisch gezeigte Rechen 15 gehalten, die jeweils mehrere Finger 17 umfassen und im Betrieb mit den Rechenträgern 16 gemeinsam hin- und herschwenken.

Die Gestaltung der Rechen 15 ist in Fig. 2 gezeigt. Jeder Rechen 15 besitzt einen Halteabschnitt 25, der am Rechenträger 16 fixierbar ist. Jeder Rechen 15 besitzt außerdem eine Vielzahl von Fingern 17. Im Ausführungsbeispiel sind an jedem Rechen 15 sechs Finger 17 vorgesehen. Jeder Rechen 15 ist einteilig ausgebildet. Der Halteabschnitt 25 ist dadurch fest mit den Fingern 17 verbunden. Die Finger 17 können nicht vom Halteabschnitt 25 abgenommen werden, ohne den Rechen 15 zu zerstören. Im Ausführungsbeispiel bestehen die Rechen 15 aus Kunststoff und sind vorteilhaft in einem Spritzgussverfahren hergestellt. Zur Fixierung an den Rechenträgern 16 besitzt jeder Rechen 15 Befestigungsöffnungen 48. Im Ausführungsbeispiel sind für jeden Rechen 15 drei Befestigungsöffnungen 48 vorgesehen, die als kreisförmige Löcher ausgebildet sind. Jeder Rechen 15 besitzt außerdem Erhebungen, die als Führungsstege 30 ausgebildet sind und die zur Vorfixierung der Rechen 15 an den Rechenträgern 16 dienen, wie im Folgenden noch näher erläutert wird. Wie Fig. 2 zeigt, sind die beiden Rechenträger 16 identisch ausgebildet und um die Drehachse 8 der Antriebswelle 7 um 180° gedreht zueinander angeordnet. Wie Fig. 2 auch zeigt, besitzt das Getriebegehäuse 11 einen Klemmabschnitt 46, mit dem das Getriebegehäuse 11 am zweiten Ende 23 auf dem Führungsrohr 10 festklemmbar ist.

Der Rechenträger 16 weist drei Klemmabschnitte 59 auf, die von einem Grundkörper 60 des Rechenträgers 16 in Richtung auf die Finger 17 des Rechens 15 ragen. Zwischen den Klemmabschnitten 59 ist in Längsrichtung der Führungsstege 30 jeweils ein Freiraum 72 gebildet. Zur Montage der Rechen 15 an den Rechenträgern 16 werden die Rechen 15 aus der in Fig. 2 gezeigten Stellung zunächst bezogen auf die Drehachse 8 (Fig. 1) nach außen bzw. in einer Richtung etwa tangential zur Schwenkachse 18 nach außen, also voneinander weg, gezogen, anschließend an den Rechenträgern 16 so eingesetzt, dass die Abschnitte der Führungsstege 30 jeweils in einem Freiraum 72 bzw. neben dem Rechenträger 16 zu liegen kommen und zu den Rechenträgern 16 derart ausgerichtet, dass die Abschnitte der Führungsstege 30 benachbart zu Nuten 29 in den Klemmabschnitten 59 angeordnet sind. Anschließen werden die Rechen 15 in Längsrichtung der Nuten 29 in die Klemmabschnitte 59 eingeschoben. Dabei werden die Rechen 15 im Ausführungsbeispiel auf die Drehachse 8 (Fig. 1) zu bewegt. Dies ist durch den Pfeil 58 in Fig. 2 schematisch gezeigt. Vorzugsweise werden die Rechen 15 nacheinander montiert. Im Ausführungsbeispiel ist der Rechenträger 16 einteilig ausgebildet. Auch eine mehrteilige Ausbildung des Rechenträgers 16 kann jedoch vorteilhaft sein.

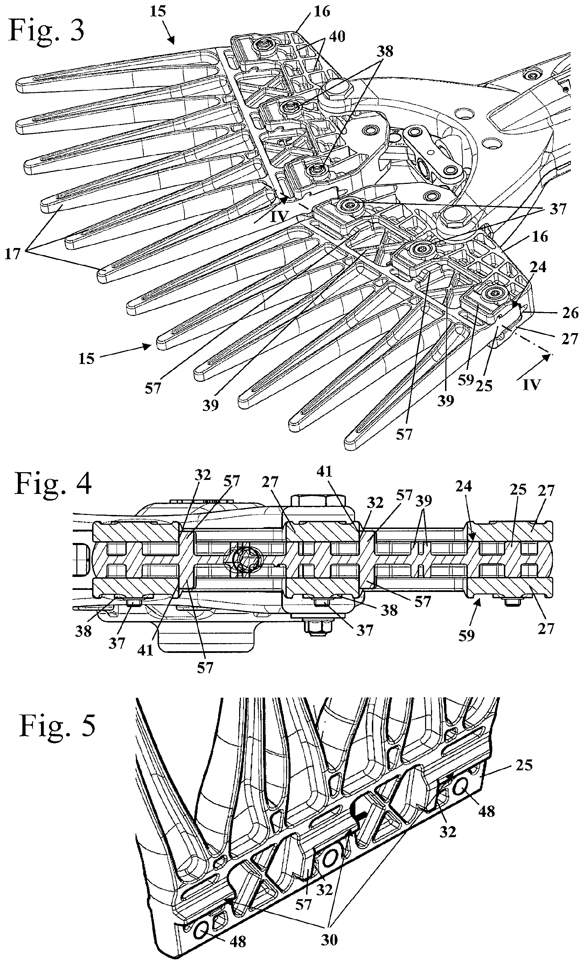

Wie Fig. 3 zeigt, ist jeder Halteabschnitt 25 eines Rechens 15 in einer Aufnahme 24 des zugeordneten Rechenträgers 16 gehalten. Die Aufnahme 24 ist in drei jeweils an einem Klemmabschnitt 59 ausgebildete Abschnitte unterteilt. Auch eine durchgängige Gestaltung der Aufnahme 24 oder eine Unterteilung in mehr Abschnitte kann jedoch zweckmäßig sein. Eine vorteilhafte Gestaltung ergibt sich insbesondere, wenn zwei Klemmabschnitte 59 vorgesehen sind, die jeweils an einem Ende der Aufnahme 24 angeordnet sind. Jeder Klemmabschnitt 59 besitzt zwei Abschnitte gegenüberliegender Seitenbereiche 27, zwischen denen der Halteabschnitt 25 geklemmt gehalten ist. Zum Fixieren des Halteabschnittes 25 zwischen den Seitenbereichen 27 sind Befestigungsmittel vorgesehen. Im Ausführungsbeispiel sind Befestigungsschrauben 37 vorgesehen, die in an der gegenüberliegenden Seite des Rechenträgers 16 angeordnete Muttern eingeschraubt sind. Wie Fig. 3 auch zeigt, weisen die Rechen 15 Versteifungsrippen 39 im Bereich des Halteabschnittes 25 auf, die zur Erhöhung der Steifigkeit bei gleichem oder reduziertem Gewicht der Rechen 15 dienen. Auch die Rechenträger 16 weisen Versteifungsrippen 40 auf. Die Rechenträger 16 bestehen vorteilhaft aus Metall und sind insbesondere in einem Metallgussverfahren hergestellt. Bei mehrteiliger Ausbildung des Rechenträgers 16 kann die Aufnahme 24 durch mehrere Bauteile des Rechenträgers 16 begrenzt sein.

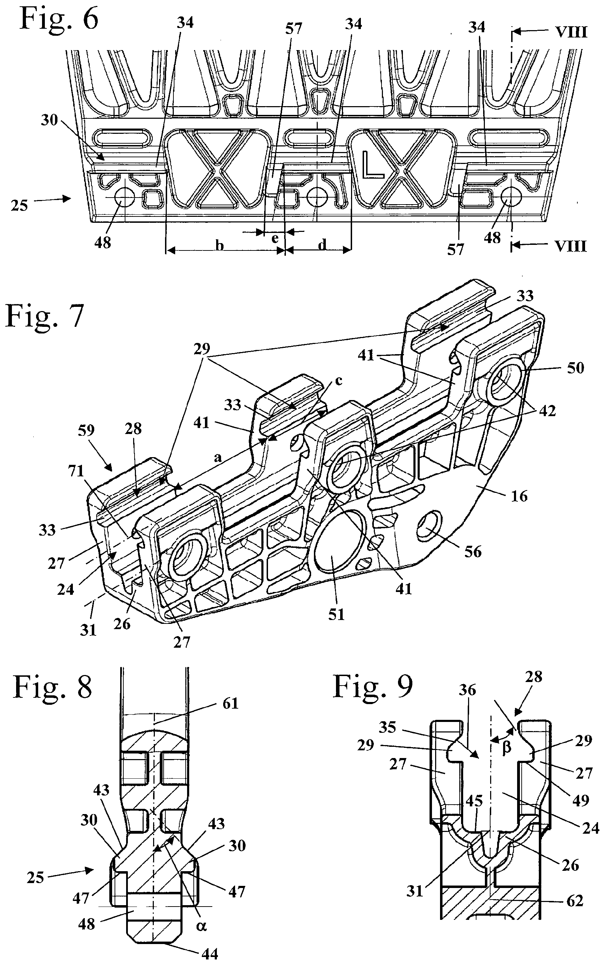

Jeder Rechen 15 besitzt mindestens einen Steg 57, der in dem in Fig. 3 gezeigten montierten Zustand der Rechen 15 an einem Klemmabschnitt 59 anliegt. Im Ausführungsbeispiel sind vier Stege 57 vorgesehen, die paarweise einander gegenüberliegend angeordnet sind. Dies ist im Einzelnen in Fig. 4 gezeigt. Die Stege 57 wirken mit jeweils einer Stirnseite 41 der Klemmabschnitte 59 zusammen und bilden mit diesen jeweils einen Anschlag 32. Im Ausführungsbeispiel wirken die Stege 57 mit den Stirnseiten 41 der Seitenbereiche 27 der Klemmabschnitts 59 zusammen. Dadurch ist die Endposition des Rechens 15 am Rechenträger 16 konstruktiv vorgegeben. In der in Fig. 4 gezeigten Endposition liegen Befestigungsöffnungen 42 des Rechenträgers 16 (Fig. 7) und die Befestigungsöffnungen 48 des Rechens 15 (Fig. 2) vorzugsweise deckungsgleich übereinander, so dass die Montage der Befestigungsschrauben 37 vereinfacht ist. Wie Fig. 3 zeigt, sind die Seitenbereiche 27 an einem Verbindungsbereich 26 miteinander verbunden. Die Seitenbereiche 27 bilden mit dem Verbindungsbereich 26 einen etwa U-förmigen Querschnitt.

Fig. 5 zeigt den Führungssteg 30, der am Halteabschnitt 25 ausgebildet ist, so wie die Befestigungsöffnungen 48. Wie Fig. 6 zeigt, ist der Führungssteg 30 in drei Abschnitte 34 unterteilt. Die Abschnitte 34 besitzen zueinander einen Abstand b. Die Abschnitte 34 des Führungsstegs 30 besitzen dabei eine Länge d. Die Länge d ist ohne die Stege 57 gemessen. Der Steg 57 besitzt eine Breite e.

Fig. 7 zeigt die Gestaltung des Rechenträgers 16 im Einzelnen. Die Seitenbereiche 27 besitzen an ihrer der Aufnahme 24 zugewandten Seite jeweils eine Nut 29. Jede Nut 29 ist in drei Abschnitte 33 unterteilt, die sich jeweils in einem Klemmabschnitt 59 erstrecken. Die Abschnitte 33 der Nut 29 und damit die Klemmabschnitte 59 besitzen an der Nut 29 einen Abstand a zueinander. Der Abstand a ist größer als der Abstand d der Abschnitte 34 des Führungsstegs 30. Im Ausführungsbeispiel ist der Abstand a größer als der Abstand d der Abschnitte 34 des Führungsstegs 30 zuzüglich der Breite eines Stegs 57. Die Abstände a, d und die Breite e des Stegs 57 sind dabei in Längsrichtung der Nut 29 gemessen. Die Abschnitte 33 der Nut 29 besitzen jeweils eine Länge c. Die Länge c ist kleiner als der Abstand b zwischen benachbarten Abschnitten 34 des Führungsstegs 30. Im Ausführungsbeispiel ist die Länge c kleiner als der Abstand b zwischen benachbarten Abschnitten 34 des Führungsstegs 30 abzüglich der Breite e des Stegs 57. Auch der Abstand b und die Länge c sind dabei in Längsrichtung der Nut 29 gemessen.

Zwischen den Seitenabschnitten 27 ist an der dem Verbindungsbereich 26 abgewandten Seite der Aufnahme 24 eine Öffnung 28 gebildet, durch die der Halteabschnitt 25 des Rechens 15 von der dem Verbindungsbereich 26 abgewandten Seite in die Aufnahme 24 eingeschoben werden kann. Hierzu werden die Abschnitte 34 des Führungsstegs 30 so ausgerichtet, dass sie jeweils in einen Freiraum 72 zwischen benachbarten Klemmabschnitten 59 oder - bei den am weitesten von der Drehachse 8 (Fig. 1) entfernten Klemmabschnitten 59 - neben den am weitesten von der Drehachse 8 entfernten Klemmabschnitt 59 gelangen. Anschließend wird der Halteabschnitt 25 des Rechens 15 in der Aufnahme 24 verschoben, wobei die Führungsstege 30 solange in die Nuten 29 eingeschoben werden, bis die Anschläge 32 zur Anlage an den Stirnseiten 41 der Klemmabschnitte 59 gelangen. Die Verschiebung erfolgt dabei in einer Längsrichtung der Nut 29. Die Nut 29 und der Führungssteg 30 verlaufen parallel zur Längsrichtung 31 des Verbindungsbereichs 26. Die Aufnahme 24 besitzt eine Längsrichtung 71, die im Ausführungsbeispiel parallel zur Längsrichtung 31 des Verbindungsbereichs 26 verläuft.

Jeder Klemmabschnitt 59 besitzt eine Befestigungsöffnung 42, die als beide Seitenbereiche 27 durchragendes Loch ausgebildet ist. Die Befestigungsöffnungen 42 sind von einem Rand 50 umgeben, der den innerhalb des Randes 50 anzuordnenden Kopf einer Befestigungsschraube 37 vor Beschädigung schützt.

Die Figuren 8 und 9 zeigen die Geometrie des Halteabschnittes 25 und der Aufnahme 24 im Einzelnen. Der Halteabschnitt 25 besitzt an jeder Längsseite einen Führungssteg 30. Die Führungsstege 30 sind im Ausführungsbeispiel spiegelsymmetrisch zueinander ausgebildet. Jeder Führungssteg 30 besitzt eine Längsseite 47, die senkrecht zu einer Mittelebene 61 des Halteabschnitts 25 ausgerichtet ist. Die Mittelebene 61 ist die Symmetrieebene des Halteabschnittes 25 und der Führungsstege 30. Die gegenüberliegende Längsseite der Führungsstege 30 ist als Druckfläche 43 ausgebildet, die zur Mittelebene 61 geneigt ist. Im Ausführungsbeispiel schließt die Druckfläche 43 mit der Mittelebene 61 einen Winkel α ein, der vorteilhaft etwa 30° bist etwa 60° beträgt. Im Ausführungsbeispiel ist ein Winkel α von etwa 45° vorgesehen. Der Winkel α öffnet dabei zu der den Fingern 17 (Fig. 3) abgewandten Seite. An der den Fingern 17 abgewandten Seite besitzt der Halteabschnitt 25 einen Anschlag 44. In Fig. 8 ist auch die Befestigungsöffnung 48 gezeigt, die sich senkrecht zur Mittelebene 61 erstreckt.

Wie Fig. 9 zeigt, ist die Aufnahme 24 etwa U-förmig ausgebildet und von den beiden Seitenbereichen 27 und dem Verbindungsbereich 26 begrenzt. An der dem Verbindungsbereich 26 abgewandten Seite der Nuten 29 ist jeweils eine erste Anlagefläche 35 ausgebildet. Die erste Anlagefläche 35 ist zur Mittelebene 62 geneigt und schließt mit dieser einen Winkel β ein, der in Richtung auf den Verbindungsbereich 26 öffnet und der vorteilhaft etwa 30° bis etwa 60°, insbesondere etwa 45° beträgt. Der Winkel β entspricht vorteilhaft dem Winkel α am Führungssteg 30. Der Normalenvektor 36 auf die erste Anlagefläche 35 weist in die Aufnahme 24 und besitzt einen Richtungsanteil in Richtung auf den Verbindungsbereich 26. Der Verbindungsbereich 26 bildet eine zweite Anlagefläche 45 für den Anschlag 44 des Halteabschnitts 25. Die Nuten 29 der Seitenbereiche 27 sind in ihrem Querschnitt auf die Form des Führungsstegs 30 angepasst. Jede Nut 29 besitzt eine Längsseite 49, die senkrecht zu einer Mittelebene 62 des Rechenträgers 16 ausgerichtet ist. Im Ausführungsbeispiel ist die Mittelebene 62 die Symmetrieebene der Aufnahme 24.

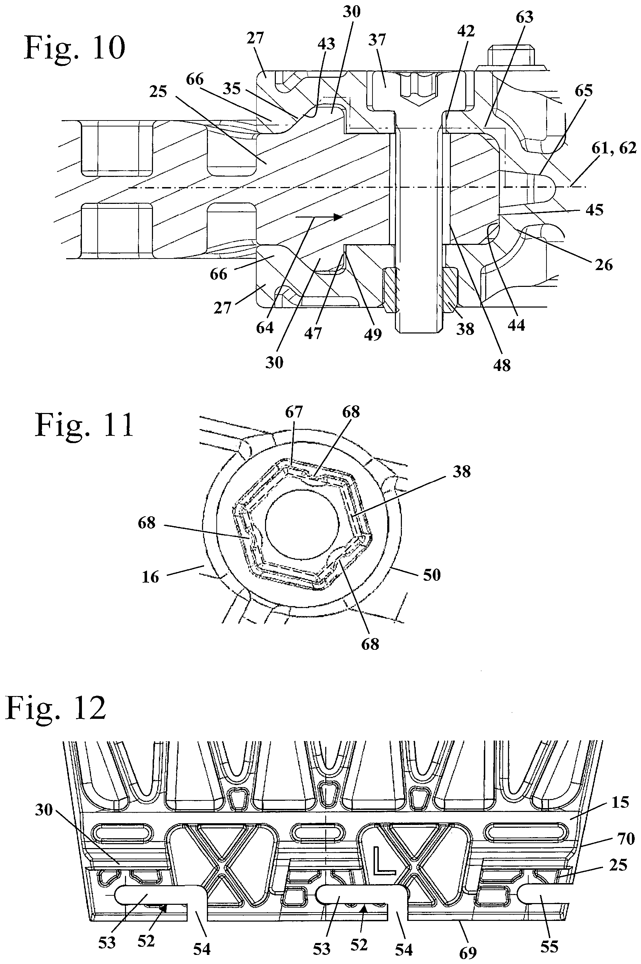

Fig. 10 zeigt den Halteabschnitt 25 in der Aufnahme 24. Die Mittelebenen 61 und 62 fallen zusammen. Eine Linie 63 zeigt schematisch die Position der Innenkontur des in Fig. 10 oben gezeigten Seitenbereiches 27 vor dem Festziehen der Befestigungsschraube 37. Der Anschlag 44 besitzt nach dem Einschieben des Halteabschnitts 25 in die Aufnahme 24 und vor dem Festziehen der Befestigungsschrauben 37 einen Abstand zur zweiten Anlagefläche 45. Die erste Anlagefläche 35 liegt an der Druckfläche 43 an. Beim Anziehen der Befestigungsschrauben 37 bewegen sich die beiden Seitenbereiche 27 aufeinander zu. Aufgrund der Schrägstellung der ersten Anlagefläche 35 und der Druckfläche 43 übt die erste Anlagefläche 35 auf den Halteabschnitt 25 eine Kraft in Richtung des Pfeils 64, also in Richtung auf die zweite Anlagefläche 45, aus. Dadurch wird der Halteabschnitt 25 in Richtung des Pfeils 64 in die Aufnahme 24 bewegt, bis der Anschlag 44 an der zweiten Anlagefläche 45 anliegt. Dadurch ist der Halteabschnitt 25 des Rechens 15 fest zwischen den beiden ersten Anlageflächen 35 und den beiden Abschnitten der zweiten Anlagefläche 45 eingespannt. Bei weiterem Anziehen der Befestigungsschrauben 37 werden die Seitenbereiche 27 elastisch verformt, bis die Innenflächen der Seitenbereiche 27 an den Außenflächen des Halteabschnitts 25 zur Anlage kommen. Dadurch ist der Halteabschnitt 25 in der Aufnahme 24 spielfrei geklemmt gehalten. Um die Elastizität der beiden Seitenbereiche 27 und eine begrenzte Beweglichkeit zueinander zu ermöglichen, weist die zweite Anlagefläche 45 eine Längsnut 65 auf, die die zweite Anlagefläche 45 in zwei Abschnitte unterteilt.

Wie Fig. 10 zeigt, besitzt die Längsseite 47 des Führungsstegs 30 zur Längsseite 49 der Nut 29 einen Abstand zum Ausgleich von Toleranzen. Dadurch ist sichergestellt, dass der Halteabschnitt 25 bis an die zweite Anlagefläche 45 gezogen werden kann. Wie Fig. 10 auch zeigt, hintergreifen Abschnitte 66 der Seitenbereiche 27 die Führungsstege 30. Die Abschnitte 66 sind im Ausführungsbeispiel dem Verbindungsbereich 26 abgewandt und bilden die Endabschnitte der Seitenbereiche 27. Dadurch ist der Halteabschnitt 25 bereits vor dem Anziehen der Befestigungsschraube 37 in der Aufnahme 24 vorfixiert und kann nicht entgegen der Richtung des Pfeils 64 in Fig. 10 durch die Öffnung 28 (Fig. 9), also in Richtung vom Verbindungsbereich 26 weg, aus der Aufnahme 24 entnommen werden.

Um zu vermeiden, dass die Muttern 38 verloren werden können, kann eine Fixierung der Muttern 38 am Rechenträger 16 vorgesehen sein. Hierzu kann innerhalb des Rands 50 ein in Fig. 11 gezeigter zusätzlicher Rand 67 vorgesehen sein, der Fixierstege 68 trägt, die radial nach innen zur Mutter 38 ragen. Die Fixierstege 68 klemmen die Mutter 38 vorteilhaft fest und fixieren sie dadurch am Rechenträger 16. Auch eine andere Gestaltung von Fixiermitteln für die Mutter 38 kann vorgesehen sein.

Fig. 12 zeigt ein Ausführungsbeispiel für Befestigungsöffnungen 52 und 55 am Halteabschnitt 25. Es sind zwei Befestigungsöffnungen 52 vorgesehen, die einen ersten Abschnitt 53 aufweisen, der parallel zum Führungssteg 30 verläuft, sowie einen zweiten Abschnitt 54, der sich bis zu einer Stirnseite 69 des Halteabschnittes 25 erstreckt. Die Stirnseite 69 ist dabei die Seite des Halteabschnittes 25, die den Fingern 17 abgewandt liegt und an der der Anschlag 44 (Fig. 10) ausgebildet ist. Eine Befestigungsöffnung 55 verläuft lediglich parallel zum Führungssteg 30 und erstreckt sich bis zu einer Seite 70 des Rechens 15. Die Befestigungsöffnung 55 ist dabei kürzer als der erste Abschnitt der Befestigungsöffnungen 52 ausgebildet. Durch die L-Form der Befestigungsöffnungen 52 und die Erstreckung der Befestigungsöffnung 55 bis zur Seite 70 des Rechens 15 kann der Rechen 15 ohne vollständiges Lösen der Befestigungsschrauben 37 vom Rechenträger 16 demontiert werden. Hierzu werden die Befestigungsschrauben 37 (Fig. 10) teilweise gelöst, und anschließend wird der Rechen 15 parallel zum Führungssteg 30 und zur Nut 29 verschoben, bis der Führungssteg 30 aus der Nut 29 gelangt. Anschließend wird der Halteabschnitt 25 durch die Öffnung 28 aus der Aufnahme 24 gezogen. Dabei bewegen sich die Befestigungsschrauben 37 zunächst in den ersten Abschnitten 53 und dann in den zweiten Abschnitten 54 der Befestigungsöffnungen 52.

Im Ausführungsbeispiel ist an jedem Rechenträger 16 ein einziger Rechen 15 angeordnet. Alle Finger 17, die mit einem Rechenträger 16 verbunden sind, sind damit an einem einzigen Rechen 15 einteilig miteinander ausgebildet.

Im Ausführungsbeispiel wird der Halteabschnitt 25 gegen den Verbindungsabschnitt 26 gedrückt. Es kann jedoch auch vorgesehen sein, dass die erste Anlagefläche 35 am Verbindungsbereich 26 angeordnet ist und der Halteabschnitt 25 gegen eine Längsseite der Nut 29 gedrückt wird. Auch eine weitere Nut oder ein weiterer Vorsprung, der die zweite Anlagefläche 45 bildet, kann vorteilhaft sein. Die Vormontage des Halteabschnittes 25 am Rechenträger 16 erfolgt vorteilhaft mit Spiel, so dass sich der Halteabschnitt 25 in der Aufnahme 24 beim Anziehen der Befestigungsschraube 37 noch bewegt. Es kann jedoch auch vorgesehen sein, dass bereits beim Einschieben des Rechens 15 in den Rechenträger 16 eine Vorspannung aufgebaut wird. Dann wird der Halteabschnitt 25 bereits beim Einschieben in den Rechenträger 16 gegen die zweite Anlagefläche 45 gedrückt.

Um eine verbesserte Fixierung und Vibrationsfestigkeit zu erreichen, kann der Halteabschnitt 25 und/oder die Aufnahme 24 mit einem elastischen Material ummantelt bzw. ausgekleidet sein.

Alle Finger 17 eines Rechens 15 können in einer Ebene, insbesondere in der Mittelebene 61 liegen. Es kann jedoch auch vorgesehen sein, dass die Finger 17 aus der Mittelebene 61 abwechselnd zu beiden Seiten geneigt sind. Dies ist in Fig. 5 gezeigt.

Im Ausführungsbeispiel ist der Halteabschnitt 25 am Rechen 15 und die Aufnahme 24 am Rechenträger 16 ausgebildet. Es kann jedoch auch vorteilhaft sein, die Aufnahme 24 am Rechen 15 und den Halteabschnitt 25 am Rechenträger 16 auszubilden.

Im Ausführungsbeispiel ist die Öffnung 28 den Fingern 17 zugewandt angeordnet. Auch eine seitliche Anordnung der Öffnung 28 kann jedoch vorteilhaft sein. Die Nut 29 und die Aufnahme 24 sind im Ausführungsbeispiel in Längsrichtung des Halteabschnitts 25 ausgerichtet. Die Nut 29, die Aufnahme 24 und die Längsrichtung des Halteabschnitts 25 erstrecken sich dabei im Ausführungsbeispiel quer zur Längsrichtung der Finger 17. Es kann jedoch auch vorteilhaft sein, die Nut 29 und die Aufnahme 24 quer zur Längsrichtung des Halteabschnitts 25, insbesondere etwa in Längsrichtung der Finger 17, auszurichten, insbesondere bei seitlicher Anordnung der Öffnung 28. Die Längsrichtung des Halteabschnitts 25 ist insbesondere die Richtung, in der eine Verbindungsgerade der Anbindungsbereiche, an denen die Finger 17 am Halteabschnitt 25 angebunden sind, liegt.

Die Nut 29, die Aufnahme 24 und die Längsrichtung des Halteabschnitts 25 sind bezogen auf die Schwenkbewegung der Rechenträger 16, die in Fig. 1 durch die Doppelpfeile 19 angedeutet ist, etwa tangential zu den Doppelpfeilen 19 ausgerichtet. Auch eine Ausrichtung der Nut 29 und der Aufnahme 24 etwa radial zur Schwenkachse 18 des jeweiligen Rechenträgers 16 kann jedoch vorteilhaft sein.

## Patentansprüche

1. Erntegerät mit mindestens einem um eine Schwenkachse (18) schwenkbar gelagerten Rechen (15), und mit einer Antriebseinheit, die den Rechen (15) im Betrieb um die Schwenkachse (18) hin- und herschwenkend bewegt, wobei der Rechen (15) mehrere Finger (17) umfasst, wobei der Rechen (15) über Mittel zur Fixierung an einem Rechenträger (16) gehalten ist, wobei die Mittel zur Fixierung eine Aufnahme (24) und einen Halteabschnitt (25) umfassen, wobei der Halteabschnitt (25) in der Aufnahme (24) angeordnet ist, und wobei die Aufnahme (24) einen Verbindungsbereich (26), zwei einander gegenüberliegend angeordnete Seitenbereiche (27) und eine dem Verbindungsbereich (26) gegenüberliegend angeordnete Öffnung (28) besitzt, durch die der Halteabschnitt (25) ragt,
**dadurch gekennzeichnet, dass** mindestens ein Seitenbereich (27) den Halteabschnitt (25) in Richtung auf die Öffnung (28) hintergreift.

2. Erntegerät nach Anspruch 1,
**dadurch gekennzeichnet, dass** die Mittel zur Fixierung eine Erhebung umfassen, die in eine Nut (29) eingreift.

3. Erntegerät nach Anspruch 2,
**dadurch gekennzeichnet, dass** die Nut (29) an der Aufnahme (24) ausgebildet ist und die Erhebung an dem Halteabschnitt (25).

4. Erntegerät nach Anspruch 2 oder 3,
**dadurch gekennzeichnet, dass** die Erhebung als Führungssteg (30) ausgebildet ist, und dass die Nut (29) und der Führungssteg (30) parallel zur Längsrichtung (31) des Verbindungsbereichs (26) verlaufen.

5. Erntegerät nach einem der Ansprüche 2 bis 4,
**dadurch gekennzeichnet, dass** die Nut (29) und die Erhebung jeweils mindestens zwei in Längsrichtung der Nut (29) beabstandete Abschnitte (33, 34) umfassen, wobei der Abstand (a) zwischen den Abschnitten (33) der Nut (29) mindestens der Länge (d) eines Abschnitts (34) der Erhebung entspricht und der Abstand (b) zwischen zwei Abschnitten (34) der Erhebung mindestens der Länge (c) eines Abschnitts (33) der Nut (29).

6. Erntegerät nach einem der Ansprüche 1 bis 5,
**dadurch gekennzeichnet, dass** die Aufnahme (24) eine erste Anlagefläche (35) und eine zweite Anlagefläche (45) für den Halteabschnitt (25) besitzt, wobei die erste Anlagefläche (35) an einem Seitenbereich (27) angeordnet und so geneigt ist, dass die Anlagefläche (35) beim Bewegen der beiden Seitenbereiche (27) aufeinander zu eine Kraft auf den Halteabschnitt (25) in Richtung auf die zweite Anlagefläche (45) ausübt.

7. Erntegerät nach einem der Ansprüche 1 bis 5,
**dadurch gekennzeichnet, dass** die Aufnahme (24) eine erste Anlagefläche (35) und eine zweite Anlagefläche (45) für den Halteabschnitt (25) besitzt, wobei der Halteabschnitt (25) zwischen diesen beiden Anlageflächen (35, 45) eingespannt ist und wobei die zweite Anlagefläche (45) am Verbindungsbereich (26) angeordnet ist.

8. Erntegerät nach einem der Ansprüche 1 bis 7,
**dadurch gekennzeichnet, dass** die Mittel zur Fixierung mindestens ein Befestigungsmittel umfassen, das die Seitenbereiche (27) der Aufnahme (24) gegen den Haltebereich (25) spannt.

9. Erntegerät nach Anspruch 8,
**dadurch gekennzeichnet, dass** das mindestens eine Befestigungsmittel den Rechenträger (16) und den Rechen (15) durchragt.

10. Erntegerät nach Anspruch 8 oder 9,
**dadurch gekennzeichnet, dass** der Halteabschnitt (25) mindestens eine Befestigungsöffnung (52) aufweist, durch die das mindestens eine Befestigungsmittel ragt, wobei die Befestigungsöffnung (52) einen parallel zum Führungssteg (30) verlaufenden ersten Abschnitt (53) und einen sich quer hierzu bis zur Stirnseite (69) des Halteabschnitts (25) erstreckenden zweiten Abschnitt (54) besitzt.

11. Erntegerät nach einem der Ansprüche 1 bis 10,
**dadurch gekennzeichnet, dass** mindestens ein Anschlag (32) vorgesehen ist, der die Endposition des Halteabschnitts (25) in der Aufnahme (24) festlegt.

12. Erntegerät nach Anspruch 11,
**dadurch gekennzeichnet, dass** der Anschlag (32) an einem Steg (57) des Halteabschnitts (25) ausgebildet ist.

13. Erntegerät nach einem der Ansprüche 1 bis 12,
**dadurch gekennzeichnet, dass** die Aufnahme (24) am Rechenträger (16) ausgebildet ist und der Halteabschnitt (25) am Rechen (15).

14. Erntegerät nach einem der Ansprüche 1 bis 13,
**dadurch gekennzeichnet, dass** der Rechenträger (16) aus Metall und der Rechen (15) aus Kunststoff ausgebildet ist.

15. Erntegerät nach einem der Ansprüche 1 bis 14,
**dadurch gekennzeichnet, dass** der Rechen (15) einteilig ausgebildet ist.

16. Erntegerät nach einem der Ansprüche 1 bis 15,
**dadurch gekennzeichnet, dass** der Rechenträger (16) um eine Schwenkachse (18) schwenkbar gelagert ist.

## Claims

1. Harvesting device comprising a rake (15) mounted for pivoting about a pivot axis (18) and a drive unit (15), which moves the rake (15) to pivot to and fro about the pivot axis (18), wherein the rake (15) comprises a plurality of fingers (17), wherein the rake (15) is held on a rake support (16) by fixing means, wherein the fixing means comprise a receptacle (24) and a holding section (25), wherein the holding section (25) is located in the receptacle (24) and wherein the receptacle (24) has a connecting region (26), two lateral regions (27) arranged opposite each other and an opening (28), which is located opposite the connecting region (26) and through which the holding section (25) extends,
**characterised in that** at least one lateral region (27) engages the holding section (25) from behind towards the opening (28).

2. Harvesting device according to claim 1,
**characterised in that** the fixing means comprises a raised area which engages with a groove (29).

3. Harvesting device according to claim 2,
**characterised in that** the groove (29) is formed on the receptacle (24) and the raised area is formed on the holding section (25).

4. Harvesting device according to claim 2 or 3,
**characterised in that** the raised area is designed as a guide web (30) and the groove (29) and the guide web (30) extend parallel to the longitudinal direction (31) of the connecting region (26).

5. Harvesting device according to any of claims 2 to 4,
**characterised in that** both the groove (29) and the raised area comprise at least two sections (33, 34) spaced in the longitudinal direction of the groove (29), wherein the distance (a) between the sections (33, 34) of the groove (29) corresponds at least to the length (d) of a section (34) of the raised area and the distance (b) between two sections (34) of the raised area corresponds at least to the length (c) of a section (33) of the groove (29).

6. Harvesting device according to any of claims 1 to 5,
**characterised in that** the receptacle (24) has a first contact surface (35) and a second contact surface (45) for the holding section (25), wherein the first contact surface (35) is located in a lateral region (27) and inclined in such a way that the contact surface (35), when the two lateral regions (27) move towards each other, applies a force in the direction of the second contact surface (45) to the holding section (25).

7. Harvesting device according to any of claims 1 to 5,
**characterised in that** the receptacle (24) has a first contact surface (35) and a second contact surface (45) for the holding section (25), wherein the holding section (25) is clamped between these two contact surfaces (35, 45) and wherein the second contact surface (45) is located in the connecting region (26).

8. Harvesting device according to any of claims 1 to 7,
**characterised in that** the fixing means comprise at least one fastening means which clamps the lateral regions (27) of the receptacle (24) against the holding section (25).

9. Harvesting device according to claim 8,
**characterised in that** the at least one fastening means extends through the rake support (16) and the rake (15).

10. Harvesting device according to claim 8 or 9,
**characterised in that** the holding section (25) has at least one fastening opening (52), through which the at least one fastening means extends, wherein the fastening opening (52) comprises a first section (53) extending parallel to the guide web (30) and a second section (54) extending perpendicularly thereto to the end face (69) of the holding section (25).

11. Harvesting device according to any of claims 1 to 10,
**characterised in that** at least one stop (32) is provided to determine the end position of the holding section (25) in the receptacle (24).

12. Harvesting device according to claim 11,
**characterised in that** the stop (32) is formed on a web (57) of the holding section (25).

13. Harvesting device according to any of claims 1 to 12,
**characterised in that** the receptacle (24) is formed on the rake support (16) and the holding section (25) is formed on the rake (15).

14. Harvesting device according to any of claims 1 to 13,
**characterised in that** the rake support (16) is made of metal and the rake (15) is made of plastic.

15. Harvesting device according to any of claims 1 to 14,
**characterised in that** the rake (15) is designed in one piece.

16. Harvesting device according to any of claims 1 to 15,
**characterised in that** the rake support (16) is pivotably mounted about a pivot axis (18).

## Revendications

1. Appareil de récolte avec au moins un peigne (15) monté pivotant sur un axe de pivotement (18), et avec une unité d'entraînement qui, en fonctionnement, déplace le peigne (15) sur l'axe de pivotement (18) suivant un mouvement de va-et-vient, le peigne (15) comprenant plusieurs doigts (17), le peigne (15) étant retenu sur un support de peigne (16) par l'intermédiaire de moyens de fixation, les moyens de fixation comprenant un logement (24) et une section de retenue (25), la section de retenue (25) étant disposée dans le logement (24), et le logement (24) présentant une zone de liaison (26), deux zones latérales (27) disposées l'une en face de l'autre, et une ouverture (28), disposée à l'opposé de la zone de liaison (26), que traverse la section de retenue (25),
**caractérisé en ce qu'**au moins une zone latérale (27) s'accroche derrière la section de retenue (25) en direction de l'ouverture (28).

2. Appareil de récolte selon la revendication 1,
**caractérisé en ce que** les moyens de fixation comprennent une saillie qui s'engage dans une rainure (29).

3. Appareil de récolte selon la revendication 2,
**caractérisé en ce que** la rainure (29) est formée sur le logement (24), et la saillie sur la section de retenue (25).

4. Appareil de récolte selon la revendication 2 ou 3,
**caractérisé en ce que** la saillie est conçue comme une patte de guidage (30), et **en ce que** la rainure (29) et la patte de guidage (30) sont parallèles au sens longitudinal (31) de la zone de liaison (26).

5. Appareil de récolte selon l'une des revendications 2 à 4,
**caractérisé en ce que** la rainure (20) et la saillie comprennent respectivement au moins deux sections (33, 34) espacées dans le sens de la rainure (29), la distance (a) entre les sections (33) de la rainure (29) correspondant au moins à la longueur (d) d'une section (34) de la saillie, et la distance (b) entre deux sections (34) de la saillie correspondant au moins à la longueur (c) d'une section (33) de la rainure (29).

6. Appareil de récolte selon l'une des revendications 1 à 5,
**caractérisé en ce que** le logement (24) présente une première surface d'application (35) et une seconde surface d'application (45) pour la section de retenue (25), la première surface d'application (35) étant disposée sur une zone latérale (27) et étant inclinée de manière à exercer, lors du déplacement des deux zones latérales (27) l'une vers l'autre, une force sur la section de retenue (25) en direction de la seconde surface d'application (45).

7. Appareil de récolte selon l'une des revendications 1 à 5,
**caractérisé en ce que** le logement (24) présente une première surface d'application (35) et une seconde surface d'application (45) pour la section de retenue (25), ladite section de retenue (25) étant serrée entre ces deux surfaces d'application (35, 45), et la seconde surface d'application (45) étant disposée sur la zone de liaison (26).

8. Appareil de récolte selon l'une des revendications 1 à 7,
**caractérisé en ce que** les moyens de fixation comprennent au moins un moyen d'attache, qui serre les zones latérales (27) du logement (24) contre la zone de retenue (25).

9. Appareil de récolte selon la revendication 8,
**caractérisé en ce que** le ou les moyens d'attache traversent le support de peigne (16) et le peigne (15).

10. Appareil de récolte selon la revendication 8 ou 9,
**caractérisé en ce que** la section de retenue (25) présente au moins une ouverture d'attache (52) que traversent le ou les moyens d'attache, l'ouverture d'attache (52) présentant une première section (53), parallèle à la patte de guidage (30), et une seconde section (54), qui s'étend transversalement par rapport à la première jusqu'au côté frontal (69) de la section d'attache (25).

11. Appareil de récolte selon l'une des revendications 1 à 10,
**caractérisé en ce qu'**il est prévu au moins une butée (32), qui bloque la position de fin de course de la section de retenue (25) dans le logement (24).

12. Appareil de récolte selon la revendication 11,
**caractérisé en ce que** la butée (32) est formée sur une patte (57) de la section de retenue (25).

13. Appareil de récolte selon l'une des revendications 1 à 12,
**caractérisé en ce que** le logement (24) est formé sur le support de peigne (16), et la section de retenue (25) sur le peigne (15).

14. Appareil de récolte selon l'une des revendications 1 à 13,
**caractérisé en ce que** le support de peigne (16) est en métal, et le peigne (15) en matière plastique.

15. Appareil de récolte selon l'une des revendications 1 à 14,
**caractérisé en ce que** le peigne (15) est formé d'une seule pièce.

16. Appareil de récolte selon l'une des revendications 1 à 15,
**caractérisé en ce que** le support de peigne (16) est monté pivotant sur un axe de pivotement (18).
